# EUROPEAN PATENT APPLICATION

(11) **EP 4 294 052 A1**
(43) Date of publication of application: **20.12.2023**
(21) Application number: 22179365.6
(22) Date of filing: 16.06.2022
(51) Int. Cl.: H04R 25/00

(54) **BLANK OF A HOUSING SHELL FOR AN EARPIECE COMPRISING A WINDOW IN A WALL, HOUSING SHELL, EARPIECE, AND METHOD OF ITS PRODUCTION**

(71) Applicant: Sonova AG, 8712 Stäfa (CH)
(72) Inventor: SILBERZAHN, Konstantin, 8038 Zürich (CH); TOTH, Tibor, 8713 Uerikon (CH); FURRER, Florian, 8004 Zürich (CH); GUIDA, Antonio, 8712 Stäfa (CH)

(57) **Abstract**

The disclosure relates to a blank of a housing shell (701) for an earpiece (800) configured to be at least partially inserted into an ear canal of a user and to a housing shell (701) which may be produced from the blank. The blank (101, 201) and/or the housing shell (701) comprise a wall (103) formed from a resin, wherein the wall (103) has a shape at least partially customized to the ear canal and a window (131, 151, 231, 251, 301, 321, 341, 351, 361, 371, 401, 421, 441, 461, 501, 521, 541, 561, 601, 621, 651, 721) extends through the wall (103), the window bordering two edges (232 - 235, 252 - 255, 622 - 625, 722 - 725) formed in the wall (103) and joined at a corner region (236 - 239, 256 - 259, 626 - 629, 726 - 729) of the window. The disclosure further relates to an earpiece which may be produced from the blank and a method of producing the blank, the housing shell, and the earpiece.

To allow producing the housing shell in an environmental friendly and/or cost effective and/or material conserving way, in particular by allowing a cleaning of the blank from resin residuals by a mechanical force, a recess (246 - 249, 266 - 269, 636 - 639, 736 - 739) projecting from at least one of said edges at the corner region is formed in the wall (103).

## Description

### TECHNICAL FIELD

The invention relates to a blank of a housing shell for an earpiece configured to be at least partially inserted into an ear canal of a user, according to the preamble of claim 1, to a housing shell, according to the preamble of claim 2, and to an earpiece, according to the preamble of claim 9. The invention further relates to a method of producing a blank of a housing shell, according to the preamble of claim 11, a method of producing a housing shell, according to the preamble of claim 13, and a method of producing an earpiece, according to the preamble of claim 15.

### BACKGROUND

Hearing devices may be used to improve the hearing capability or communication capability of a user, for instance by compensating a hearing loss of a hearing-impaired user, in which case the hearing device is commonly referred to as a hearing instrument such as a hearing aid, or hearing prosthesis. A hearing device may also be used to output sound based on an audio signal which may be communicated by a wire or wirelessly to the hearing device. A hearing device may also be used to reproduce a sound in a user's ear canal detected by a microphone. The reproduced sound may be amplified to account for a hearing loss, such as in a hearing instrument, or may be output without accounting for a hearing loss, for instance to provide for a faithful reproduction of detected ambient sound and/or to add sound features of an augmented reality in the reproduced ambient sound, such as in a hearable. A hearing device may also provide for a situational enhancement of an acoustic scene, e.g. beamforming and/or active noise cancelling (ANC), with or without amplification of the reproduced sound. A hearing device may also be implemented as a hearing protection device, such as an earplug, configured to protect the user's hearing. Different types of hearing devices configured to be be worn at an ear include earbuds, earphones, hearables, and hearing instruments such as receiver-in-the-canal (RIC) hearing aids, behind-the-ear (BTE) hearing aids, in-the-ear (ITE) hearing aids, invisible-in-the-canal (IIC) hearing aids, completely-in-the-canal (CIC) hearing aids, cochlear implant systems configured to provide electrical stimulation representative of audio content to a user, a bimodal hearing system configured to provide both amplification and electrical stimulation representative of audio content to a user, or any other suitable hearing prostheses. A hearing system comprising two hearing devices configured to be worn at different ears of the user is sometimes also referred to as a binaural hearing device.

Hearing devices often comprise or consist of an earpiece equipped with a housing shell customized to an ear canal of a user offering a more secured seating resulting in a more comfortable wearing and also an enhanced listening experience when at least partially inserted into the ear canal as compared to, e.g., a standardized earplug conforming to an averaged ear canal shape. Producing such a housing shell, however, is more cumbersome in that it needs to be fitted to the individually shaped ear canal of the user. Typically, a user-specific ear canal geometry is initially determined, e.g., by taking impressions of the user's ear canal. Subsequently, a blank of the housing shell is formed from a resin by taking into account the predetermined individual ear canal geometry. To this end, a resin based 3D printing technology, such as digital light processing (DLP) or another stereolithography (SLA) process, is often employed. The blank may then be further processed, e.g., by removing undesired residuals of the resin from the blank, in order to obtain the housing shell ready for usage.

More recently, earpieces have been equipped with new components requiring a window in a wall of the housing shell in order to provide for an enhanced functionality of the hearing device when those components are inserted in the housing shell. For example, physiological sensors such as an optical sensor including a light source and a photodetector, e.g., to collect photoplethysmography (PPG) data, or a bioelectric sensor including an electrode, e.g., an electrocardiogram (ECG) sensor recording an electrical activity of the heart, or an electroencephalography (EEG) sensor detecting electrical activity of the brain, or an electrooculography (EOG) sensor to measure an electric potential that exists between the front and back of the human eye, are increasingly desired to be implemented in devices at least partially insertable inside the ear canal. Other sensor types requiring such a window may include an environmental sensor such as a humidity sensors or a temperature sensor for measuring characteristics inside or outside the ear canal. Also more traditional hearing device components such as an ear canal microphone or a vent, e.g., an active vent, may require such a wall window. Those components may be aligned with the window by placing the component inside the housing shell either below the window or at least partially within the window to provide for their proper functioning.

To maximize a detection accuracy, it is often desired to bring some of those sensors, e.g., the physiological sensors, as close as possible to the ear canal wall, which may be achieved by providing the window at a portion of the wall of the housing shell often referred to as a sealing zone, which is in contact with the ear canal during wearing of the housing shell, as disclosed in international patent application publication No. WO 2020/192956 A1. Other sensor types or different components such as, e.g., a vent, may require a wall window rather distant from the sealing zone such that the window is not in contact with the ear canal during wearing of the housing shell inside the ear canal.

In principle, a window can be provided in the wall of the housing shell by an appropriate printing of the blank of the housing shell. However, forming the window in such a way can be rather imprecise due to a limited accuracy of the fabrication process, for instance because of undesired residuals of the resin remaining on the blank after printing. Producing certain features of the housing shell in an accurate way can therefore be rather challenging. Yet it is often vital to resolve a desired shape and dimension of the window in the wall with rather high accuracy. For instance, when the window is intended as an interface for a sensor included in the housing shell with the exterior, e.g., to probe a physiological property from a tissue at the ear canal wall, it is desirable to rather exactly match the position and size of the window with an active area of the sensor at which radiation or matter is received from the exterior or emitted to the exterior, in particular to maximize a sensitivity or accuracy of the sensor.

Residuals of the resin remaining on the surface after forming of the blank of the housing shell may be removed, at least to a certain extent, by a dedicated cleaning process. For this purpose, a cleaning fluid acting as a solvent for the residual resin can be applied on the blank. After application, the cleaning fluid can be removed from the surface, e.g., by centrifuging or washing or ultrasonic vibrations or a combination of thereof. Washing or ultrasonic baths, on the one hand, have the disadvantage to pollute the environment due to an excessive amount of hazardous fluids required for the cleaning. The waste liquid may be distilled thereafter, which, however, increases production costs. Further, a biocompatibility of the resin material which is used for housing shells of earpieces is often a pre-requisite. Such a biocompatible material is more expensive and any waste thereof in the cleaning process is unfavorable. On the other hand, by subjecting the housing shell to a mechanical force, e.g., by centrifuging or applying an air stream, after the printing, a usage of the cleaning fluid can be strongly reduced or even fully avoided due to a mechanical removement of resin residuals from the surface caused by the mechanical force. Another advantage of mechanically removing the resin residuals from the housing shell, beyond a reduction of the cleaning fluid and therefore a better environmental friendliness, is to allow collecting and recovering of the removed resin material instead of its wastage during the cleaning.

Mechanically removing the resin residuals, such as, e.g., by centrifugal forces or by applying an air stream, however, can be less effective as compared to a treatment relying on a rather large amount of a cleaning fluid and subsequent washing of the housing shell. In particular, some of the mechanically removed resin can accumulate at certain portions of the housing shell blocking the resin material from being further moved by the mechanical forces, e.g. angled portions or other surface features standing in the way of separating the residual resin from the housing shell when accelerated by the centrifugal forces or an air stream. To illustrate, when a window with pronounced corner regions is formed in a wall of the housing shell, the residuals of the resin tend to accumulate at the corner regions when the mechanical forces are applied. A desired high precision of the window dimensions in the wall can thus be compromised when relying on such a cleaning process.

### SUMMARY

It is an object of the present disclosure to avoid at least one of the above mentioned disadvantages and to propose a blank of a housing shell that can be further processed in an environmental friendly and/or cost effective and/or material conserving way to obtain the housing shell with a desired dimension of a window in the wall therefrom, in particular by allowing a cleaning of the blank from resin residuals involving application of a mechanical force. It is a further object to propose a housing shell with a window which may be produced from such a blank and/or which allows a precise alignment and/or a reliable fixation of a component in the housing shell at a desired position at the window. It is another object to propose an earpiece which can be produced from such a housing shell. It is yet another object to propose a production method of a blank and/or a housing shell and/or an earpiece for which desired dimensions of a window in a wall of the housing shell can be met at good precision, in particular with regard to the dimensions of a component inserted in the housing shell which shall be aligned with the window and/or without compromising a desired functionality of the component by inaccuracies of the wall window and/or by providing for a reliable fixation of the component at the window. It is another object to propose a production method of such a blank and/or housing shell and/or earpiece in which a sensor, in particular an optical sensor, can operate in an optimized way for a detection through the wall window, e.g., with regard to a sensitivity and/or efficiency and/or reliability and/or accuracy of the sensor.

At least one of these objects can be achieved by a blank of a housing shell comprising the features of patent claim 1 and/or a housing shell comprising the features of patent claim 2 and/or an earpiece comprising the features of patent claim 9 and/or a method of producing a blank of a housing shell comprising the features of patent claim 11 and/or method of producing a housing shell comprising the features of patent claim 13 and/or a method of producing an earpiece comprising the features of patent claim 15. Advantageous embodiments of the invention are defined by the dependent claims and the following description.

Accordingly, the invention proposes a blank of a housing shell for an earpiece configured to be at least partially inserted into an ear canal of a user, the blank comprising a wall formed from a resin, wherein the wall has a shape at least partially customized to the ear canal and a window extends through the wall, the window bordering two edges formed in the wall and joined at a corner region of the window, wherein a recess projecting from at least one of the edges at the corner region is formed in the wall.

In this way, an accumulation of residuals of the resin in a cleaning procedure of the blank involving mechanical forces acting on the blank, which would typically occur in the corner region of the window and would thus lead to a build-up of an undesired excess resin material at the corner region which would protrude from the edges toward an inner region of the window extending between the edges at the corner region, e.g., by rounding off an inner angle enclosed between the edges at the corner region, can be effectively avoided by allowing the residual resin to accumulate within the recess instead of within the inner window region.

In some implementations, the recess may thus be effectively employed as a pocket for the accumulated residual resin during mechanically cleaning the blank. Accordingly, a housing shell can be produced from this blank by a further processing including application of a mechanical force, e.g., centrifuging of the blank and/or applying an air stream on the blank and/or vibrating the blank, in which the desired dimensions of the wall window can be maintained with high precision, in particular with regard to preserving desired window dimensions in which the window includes and/or extends beyond a desired pointed shape of an inner angle at the corner region of the window enclosed between the edges. As a result, the housing shell can be produced in an environmental friendly way by employing mechanical forces on the blank for the cleaning, wherein a desired accuracy of the wall window can still be met, in particular at the corner region of the window. Furthermore, the mechanical cleaning may be employed to recover the removed resin contributing to cost savings and material conservation.

Independently, the invention proposes a housing shell for an earpiece configured to be at least partially inserted into an ear canal of a user, the housing shell comprising a wall formed from a resin, wherein the wall has a shape at least partially customized to the ear canal and a window extends through the wall, the window bordering two edges formed in the wall and joined at a corner region of the window, wherein a recess projecting from at least one of said edges at the corner region is formed in the wall.

Such a housing shell may be produced from the blank, e.g., by a further processing including removing residuals from the blank involving application of a mechanical force, and thus may offer corresponding advantages. In particular, the recess projecting from at least one of the edges at the corner region of the window in the housing shell may be partially filled by the residual resin after applying a mechanical force on the blank. The recess formed in the wall of the housing shell may therefore have a reduced dimension as compared to the recess formed in the wall of the blank. Further, irrespective of whether the housing shell may be produced from the blank and/or irrespective of whether the recess is partially filled with residual resin after applying mechanical forces on the blank, the recess in the wall of the housing shell can be advantageously employed for a stable fixation of a component within the window, e.g. by applying an adhesive, such as a glue, in the recess, wherein a remaining part of the window can be rather precisely aligned with the component.

Independently, the invention proposes an earpiece configured to be at least partially inserted into an ear canal of a user, the earpiece comprising the housing shell and a component inserted into the housing shell such that the component is aligned with said window. Desired dimensions of the component in the housing shell may thus be aligned with the window with good precision, in particular with regard to the edges bordering the window, and/or a negative impact of a desired functionality of the component by resin overlapping with the component within the window between the edges can be avoided and/or a good fixation of the component at or in the window can be accomplished at the recess, e.g., by means of an adhesive applied at the recess. Independently, the invention proposes a hearing device comprising the earpiece.

Independently, the invention proposes a method of producing a blank of a housing shell for an earpiece configured to be at least partially inserted into an ear canal of a user, the method comprising: forming the blank from a resin such that a wall of the blank has a shape at least partially customized to the ear canal and a window extends through the wall, the window bordering two edges formed in the wall and joined at a corner region of the window, wherein a recess projecting from at least one of the edges at the corner region is formed in the wall. Independently, the invention proposes a method of producing a housing shell for an earpiece configured to be at least partially inserted into an ear canal of a user, the method comprising: producing the blank of a housing shell; and subjecting the blank to a mechanical force to remove residuals of the resin from the wall. Independently, the invention proposes a method of producing an earpiece configured to be at least partially inserted into an ear canal of a user, the method comprising: producing the housing shell for the earpiece; and inserting a component of the earpiece into the housing shell such that the component is aligned with said window.

The window can thus be provided with good precision relative to dimensions of the component, in particular at the corner region, allowing a rather accurate alignment of the component with the window. For instance, in such an alignment, the component may be rather precisely fitted within the window and/or arranged below the window, wherein an undesired overlap of the side wall with the component extending beyond the window can be avoided, in particular at the corner region. Accordingly, a desired functionality of the component exploiting the window can be ensured. E.g., when the component is provided as a sensor requiring a certain dimension of the side wall window, a sensitivity and/or efficiency and/or reliability and/or accuracy of the sensor can be optimized by providing the window with good precision. At the same time, when the component is at least partially placed within the window, a rather snug fit of the component within the window can be achieved.

Subsequently, additional features of some implementations of the blank of a housing shell, the housing shell, the earpiece, the hearing device, the method of producing a blank, the method of producing a housing shell, and the method of producing an earpiece are described. Each of those features can be provided solely or in combination with at least another feature. The features can be correspondingly provided in some implementations of the blank of a housing shell and/or the housing shell and/or the earpiece and/or the hearing device and/or the method of producing a blank and/or the method of producing a housing shell and/or the method of producing an earpiece. In particular, a window, an edge, a corner region, and/or a recess as described below without specific reference to the blank or the housing shell or the earpiece may refer to a window, an edge, a corner region, and/or a recess provided in the blank and/or the housing shell and/or the earpiece.

In some implementations, the recess projects from both of said edges at the corner region. In some implementations, the recess is flush with one of said edges at the corner region. The recess may project from the other of said edges at the corner region. In some implementations, at least one of the edges is flush with a respective recess formed at a respective corner region at both ends of the edge. In some implementations, at least two edges, which may extend in parallel to one another, are flush with the recess at both ends of each edge.

In some implementations, a number of at least three of said edges are formed in the wall with a corresponding number of said corner regions at which two of said edges are joined. In some implementations, the recess is formed in at least one of said corner regions. E.g., another recess may be formed in at least one other corner region at which two of the edges are joined. E.g., in at least one other corner region at which two of the edges are joined, the two edges may by joined such that they directly adjoin each other at a respective end of the edges. In some implementations, the recess is formed in one of said corner regions, and another recess is formed in each of the other corner regions. Thus, a number of said recesses corresponding to said number of corner regions may be formed in the wall, wherein one of the recesses projects from at least one of said edges at each corner region. In some implementations, a number of four of said edges are formed in the wall with a corresponding number of said corner regions at which two of said edges are joined. In some implementations, the four edges are arranged as a trapezoid. In some instances, the four edges are arranged as a rectangle. An angle at which two of said edges are joined at each respective corner region may then correspond to a right angle.

In some implementations, the two edges are a first edge and a second edge, the corner region is a first corner region and the recess is a first recess, the window bordering a third edge formed in the wall and joined with the second edge at a second corner region of the window, wherein a second recess projecting from at least one of the second edge and the third edge at the second corner region is formed in the wall. In some instances, the first recess is flush with the first edge and projects from the second edge at the first corner region, and the second recess is flush with the third edge and projects from the second edge at the second corner region. In some instances, the first recess is flush with the first edge and projects from the second edge at the first corner region, and the second recess is flush with the second edge and projects from the third edge at the second corner region. In some instances, the first recess projects from both the first edge and the second edge at the first corner region and/or the second recess projects from both the second edge and the third edge at the second corner region.

In some implementations, the window is bordering a fourth edge formed in the wall and joined with the third edge at a third corner region of the window, wherein a third recess projecting from at least one of the third edge and the fourth edge at the third corner region is formed in the wall. In some instances, the third recess is flush with the third edge and projects from the fourth edge at the third corner region. In some implementations, the fourth edge is joined with the first edge at a fourth corner region of the window, wherein a fourth recess projecting from at least one of the first edge and the fourth edge at the fourth corner region is formed in the wall. In some instances, the fourth recess is flush with the first edge and projects from the fourth edge at the fourth corner region.

In some implementations, at least one of the edges extends rectilinearly relative to an inner and/or outer surface of the wall. In some implementations, at least one of the edges has a curved shape relative to an inner and/or outer surface of the wall. E.g., all edges bordering the window may be rectilinear or curved or at least one edge may be rectilinear and another edge may be curved. The corner region may be defined as a portion of the window at which the two edges are joined at an angle, e.g., an angle smaller than 180°. A circumference of the window may be at least partially delimited by the edges joined at the corner region and the recess at the corner region. The recess may project from at least one of said two edges joined at the corner region in a direction away from an inner region of the window extending between the edges.

In some implementations, the window is positioned at a sealing zone of the wall, the sealing zone defined as a portion of the wall that is in contact with the ear canal when the housing shell and/or the earpiece is at least partially inserted into the ear canal. In some implementations, the window or another window is positioned at a portion of the wall that is spaced from the ear canal when the housing shell and/or the earpiece is at least partially inserted into the ear canal, e.g. at a rear portion extending toward a rear end of the wall and/or at a front portion extending toward a front end of the wall.

In some implementations, the recess has a width extending in a direction of one of said edges, wherein the width is of at most one fifth of the length of the edge in which direction the width extends. In some instances, the width is of at most one tenth of the length of the edge in which direction the width extends. In some implementations, the recess is configured to provide for an accumulation of residuals of the resin when subjecting the blank to a mechanical force.

In some implementations, the component aligned with the window comprises a surface facing an inner surface of the wall. In particular, the surface of the component may be in contact with the inner surface of the wall and/or attached to the inner surface of the wall, e.g., by an adhesive. An element of the component provided on the surface of the component may be positioned at the window, e.g., the element may protrude in the window or the element may be placed below the window. In some instances, the component is aligned with the window such that said edges bordering the window adjoin edges of said element provided on the surface of the component. E.g., the edges of said element provided on the surface of the component may contact the edges bordering the window. In some instances, the component is aligned with the window such that said edges bordering the window are spaced from edges of said element provided on the surface of the component. E.g., the edges of said element provided on the surface of the component may have a gap from the edges bordering the window.

In some implementations, the component is a sensor comprising an active area, the active area defined as an area of the sensor configured to receive and/or emit radiation and/or matter, which may be employed by the sensor for the purpose of sensing a physical property, wherein the active area is positioned at the window. E.g., the active area may be sensitive to light or to temperature or to a bioelectric signal, which may be defined as an electrical current or potential generated by a living organism, or the active area may be configured to emit light. E.g., the active area may comprise a photodetector to detect the light. E.g., the active area may comprise an electrode to detect the bioelectric signal. E.g., the sensor may be an optical sensor, for instance a photoplethysmography (PPG) sensor or a temperature sensor or a bioelectric sensor, for instance an electrocardiogram (ECG) sensor, an electroencephalogram (EEG) sensor, or an electrooculography (EOG) sensor. When the sensor is aligned with the window, the active area may be positioned at the window, e.g. such that the active area projects in the window or is arranged below the window. In some instances, the active area may be positioned at the window such that said edges bordering the window adjoin edges of the active area. In some instances, the active area may be positioned at the window such that said edges bordering the window have a spacing, such as a gap, from edges of the active area. In some implementations, the component comprises a circuit board disposed at an inner surface of the housing shell, wherein an element on the circuit board is positioned at the window. For instance, the element may be the active area of a sensor.

In some implementations, the blank is formed from the resin by an additive manufacturing method, e.g. by a three dimensional (3D) printing. The 3D printing may comprise digital light processing (DLP) and/or another stereolithography (SLA) process. After forming the blank from the resin, resin residuals may remain on the blank. In some implementations, resin residuals are provided at an inner surface and/or outer surface of the wall of the blank. E.g., the resin residuals may comprise a film of resin residuals covering at least part of the inner and/or outer surface of the wall.

In some implementations, producing the blank further comprises determining a user-specific ear canal geometry, wherein the blank is formed based on the user-specific ear-canal geometry. In some implementations, producing the blank further comprises providing constraints for positioning the window on the wall; and determining a position of the window on the wall by relating the constraints to the user-specific ear canal geometry.

In some implementations, when subjecting the blank to a mechanical force, the mechanical force is provided by: centrifuging the blank; and/or applying an air stream on the blank; and/or causing the blank to vibrate. In some implementations, when subjecting the blank to a mechanical force, at least part of resin residuals on the wall are accumulating in the recess. In some implementations, producing of the housing shell further comprises, after subjecting the blank to a mechanical force, curing the blank.

In some implementations, after inserting a component of said hearing device into the housing shell such that the component is aligned with said window, the recess is filled with an adhesive. In some implementations, after inserting a component of said hearing device into the housing shell such that the component is aligned with said window, the component or a part of the component protrudes in the window or is arranged below the window. In some implementations, in which the component or a part of the component protrudes in the window, the component or the part of the component protruding in the window comprises edges adjoining the edges formed in the wall bordering the window. In some implementations, in which the component or a part of the component protrudes in the window, the component or the part of the component protruding in the window comprises edges which are spaced from the edges formed in the wall bordering the window, e.g., at a gap. In some instances, after inserting the component into the housing shell such that the component is aligned with said window, the gap between the edges of the component or part of the component protruding in the window and the edges formed in the wall bordering the window is also filled with the adhesive, in addition to the recess.

### BRIEF DESCRIPTION OF THE DRAWINGS

Reference will now be made in detail to embodiments, examples of which are illustrated in the accompanying drawings. The drawings illustrate various embodiments and are a part of the specification. The illustrated embodiments are merely examples and do not limit the scope of the disclosure. Throughout the drawings, identical or similar reference numbers designate identical or similar elements. In the drawings:
- Figs. 1A, 1B: schematically illustrate an exemplary blank of a housing shell for an earpiece in a front view and in a lateral view;
- Figs. 2A, 2B: schematically illustrate another exemplary blank of a housing shell for an earpiece in a front view and in a lateral view;
- Figs. 3A - 3F: schematically illustrate some embodiments of windows which may be implemented in a wall of the blank illustrated in Figs. 1A, 1B and/or the blank illustrated in Figs. 2A, 2B;
- Figs. 4A - 4D: schematically illustrate some further embodiments of windows which may be implemented in a wall of the blank illustrated in Figs. 1A, 1B and/or the blank illustrated in Figs. 2A, 2B;
- Figs. 5A - 5D: schematically illustrate some further embodiments of windows which may be implemented in a wall of the blank illustrated in Figs. 1A, 1B and/or the blank illustrated in Figs. 2A, 2B;
- Figs. 6A - 6F: schematically illustrate some further embodiments of windows which may be implemented in a wall of the blank illustrated in Figs. 1A, 1B and/or the blank illustrated in Figs. 2A, 2B, and corresponding windows that can be obtained by subjecting the blank to a mechanical force;
- Figs. 7A, 7B: schematically illustrate a housing comprising a housing shell produced from the blank illustrated in Figs. 2A, 2B in a front view and in a lateral view;
- Figs. 8A - 8C: schematically illustrate an earpiece comprising the housing shell illustrated in Figs. 7A, 7B in an exploded view, in a front view and in a lateral view;
- Fig. 9: schematically illustrates a component inserted in the housing shell of the earpiece illustrated in Figs. 8A - 8C;
- Fig. 10: schematically illustrates a hearing device comprising the earpiece illustrated in Figs. 8A - 8C; and
- Fig. 11: illustrates an exemplary method of producing an earpiece according to principles described herein.

### DETAILED DESCRIPTION OF THE DRAWINGS

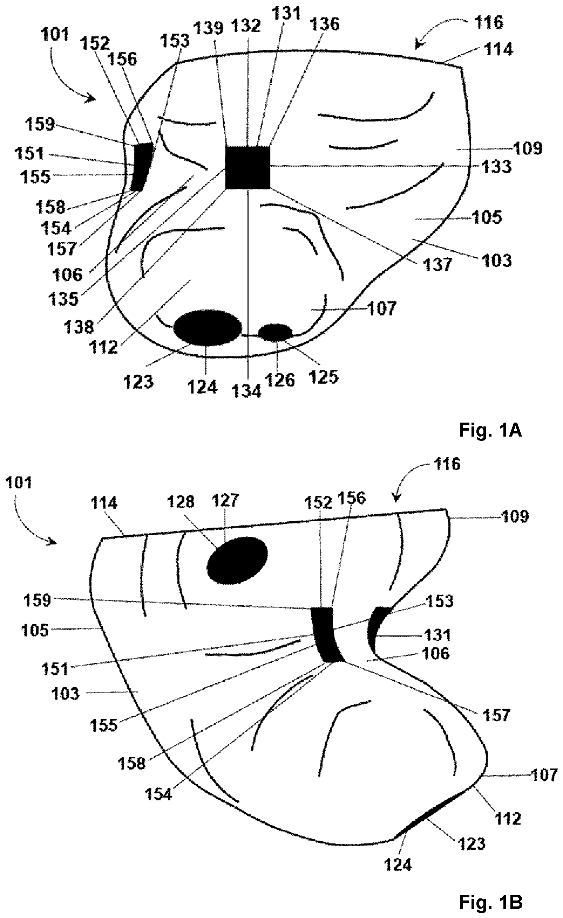

FIGS. 1A and 1B illustrate an exemplary blank 101 of a housing shell for an earpiece configured to be at least partially inserted into an ear canal of a user. FIG. 1A shows blank 101 in a front view, and FIG. 1B shows blank 101 in a lateral view. Blank 101 comprises a wall 103 having a shape at least partially customized to the ear canal. In particular, wall 103 comprises a side wall portion 105 customized to the shape of the ear canal such that side wall portion 105 can be in contact with an ear canal wall of the ear canal when at least partially inserted into the ear canal. E.g., side wall portion 105 can comprise a concave curvature 106 conforming to a bend of the ear canal. Wall 103 further comprises a front wall portion 107 tapering from side wall portion 105 at a front end 112 of blank 101. Front wall portion 107 is thus configured to face an inner region of the ear canal extending toward a tympanic membrane inside the ear canal when at least partially inserted into the ear canal.

Wall 103 further comprises a rear wall portion 109 extending from side wall portion 105 toward a rear end 114 of blank 101. Side wall portion 105 and rear wall portion 109 are joined in a seamless transition such that rear wall portion 109 substantially continues to extend in the direction of extension of side wall portion 105, e.g. in parallel to a central axis of the ear canal. However, rear wall portion 109 may not be customized to the ear canal and/or not be in contact with the ear canal wall when the housing shell is inserted into the ear canal. In some examples, rear wall portion 109 can be configured to protrude from an entrance of the ear canal when the housing shell is inserted into the ear canal. In some other examples, rear wall portion 109 can be configured to be fully located inside the ear canal when the housing shell is inserted into the ear canal. Blank 101 has an opening 116 at rear end 114. Opening 116 is delimited by an inner circumference of rear wall portion 109 at rear end 114. Open rear end 114 can be employed to insert components of the earpiece inside the housing shell, in particular inside an inner volume of the housing shell delimited by wall 103.

Side wall portion 105 may also be referred to as a sealing zone of wall 103. Sealing zone 105 can provide for an acoustical sealing between the ambient environment outside the ear and the inner region of the canal extending between front wall portion 107 and the tympanic membrane inside the ear. In some examples, rear wall portion 109 may be omitted. Rear end 114 of blank 101 including opening 116 may then be formed at a rear end of side wall portion 105. A housing shell produced from blank 101 may then be fully insertable into the ear canal.

Blank 101 may be formed from a resin by additive manufacturing techniques, e.g., in a three-dimensional (3D) printing process. For instance, a digital light processing (DLP) or another stereolithography (SLA) process may be employed for the forming of blank 101. In order to customize the shape of wall 103, in particular the shape of side wall portion 105, to the ear canal of an individual user, a user-specific ear canal geometry may be determined. For instance, the ear canal geometry may be determined from an ear impression taken from the user, e.g. by 3D scanning of the impression. A 3D model of the impression may then be created. This may comprise, e.g., with a 3D modeling software, specifying where the shape of blank 101 is fit into an dataset of the 3D scan of the impression. Blank 101 may then be formed based on the dataset of the user-specific ear-canal geometry and/or the specifications. E.g., the dataset and/or the specifications may be input in a 3D printing device in order to print blank 101 in accordance with the user-specific ear canal geometry.

As illustrated in the example, blank 101 comprises a number of windows 123, 125, 127, 131, and 151 in wall 103. Windows 123, 125, 127, 131, 151 extend through wall 103 between an inner surface and an outer surface of wall 103. Windows 123, 125, 127, 131, 151 thus constitute a passage between an inner volume enclosed by wall 103 and an external region surrounding wall 103.

Windows 123, 125, and 127 have a rounded shape, e.g., an elliptical shape. A circumference of rounded window 123, 125, 127 is delimited by a respective rounded border 124, 125, 128 formed in wall 103. Rounded window 123 is delimited by a first rounded border 124 formed in front wall portion 107. Rounded window 123 can be configured as an opening to provide for a sound outlet port. E.g., opening 123 may receive a sound outlet port of a loudspeaker, such as a receiver, accommodated in the housing shell. Rounded window 125 is delimited by a second rounded border 126 formed in front wall portion 107. Rounded window 125 can be configured as an opening to provide for a venting between the inner region of the ear canal and the ambient environment outside the ear when the housing shell is at least partially inserted into the ear canal. E.g., opening 125 may receive a vent, e.g., a tube, extending between front wall portion 107 and open rear end 114. Rounded window 127 is delimited by a rounded border 128 formed in side wall portion 105 and/or rear wall portion 109. Rounded window 127 can be configured as an opening to provide for a cable connection between components inserted in the inner volume of the housing shell and components provided externally from the housing shell. E.g., opening 127 may receive a cable and/or a cable connector. Rounded border 124, 125, 128 may be also regarded as a single edge formed in wall 103, which is closed in itself in a continuous way. Window 123, 125, 127 is bordering the single edge 124, 125, 128 formed in wall 103.

Windows 131 and 151 have an edged shape delimited by at least two edges 132, 133, 134, 135, 152, 153, 154, 155 formed in wall 103, which are joined at an angle at a corner region 136, 137, 138, 139, 156, 157, 158, 159 of window 131, 151. A shape of window 131, 151 follows a curved contour of wall 103, which curvature is subsequently disregarded and/or approximated by a plane, e.g., by projecting window 131, 151 on a virtual plane extending in parallel to a longitudinal axis of blank 101 extending between front end 112 and rear end 114. In this approximation, in the illustrated example, edged window 131 is substantially square-shaped comprising four edges 132, 133, 134, 135 of equal length, wherein two neighboring edges 132, 133, 134, 135 are joined at a respective corner region 136, 137, 138, 139 at an angle of about 90°. Edged window 151 has a substantially rectangular shape comprising two opposing edges 153, 155 of equal larger length and two opposing edges 152, 154 of equal smaller length, wherein two neighboring edges 152, 153, 154, 155 are joined at a respective corner region 156, 157, 158, 159 at an angle of about 90°. In particular, first edge 132, 152 and second edge 133, 153 are joined at first corner region 136, 156, second edge 133, 153 and third edge 134, 154 are joined at second corner region 137, 157, third edge 134, 154 and fourth edge 135, 155 are joined at third corner region 138, 158, and fourth edge 135, 155 and first edge 132, 152 are joined at fourth corner region 139, 159.

Edged window 131, 151 can be configured as an opening for a component inserted into the housing shell for the component to be aligned with window 131, 151. To illustrate, the component may be a sensor comprising an active area to be aligned with window 131, 151. In particular, edged windows 131, 151 may be configured as openings for different components or as openings for a single component to be aligned with windows 131, 151. To illustrate, the component may be an optical sensor comprising a first active area to be aligned with first window 131, e.g., a photodetector, and a second active area to be aligned with second window 151, e.g., a light source or multiple light sources emitting at different wavelengths, for instance a light emitting diode (LED).

In the illustrated example, corner region 136 - 139, 156 - 159, is substantially point-like resulting in two edges 132 - 135, 152 - 155, which are joined at corner region 136 - 139, 156 - 159, contacting each other at corner region 136 - 139, 156 - 159. Such a point-like corner region 136 - 139, 156 - 159, at which two edges 132 - 135, 152 - 155 are directly joined, may also be denoted as a sharp corner.

Edged window 131, 151 only comprising corner regions 136 - 139, 156 - 159 in the form of a sharp corner is illustrated mainly for illustrative purposes. In particular, in some implementations, a blank of a housing shell and/or a housing shell according to the invention may also comprise edged window 131, 151 with only sharp corners 136 - 139, 156 - 159, but further comprises at least an additional window in which at least one recess is provided, which is projecting from at least one of the edges at the corner region at which the edges are joined, as further described below.

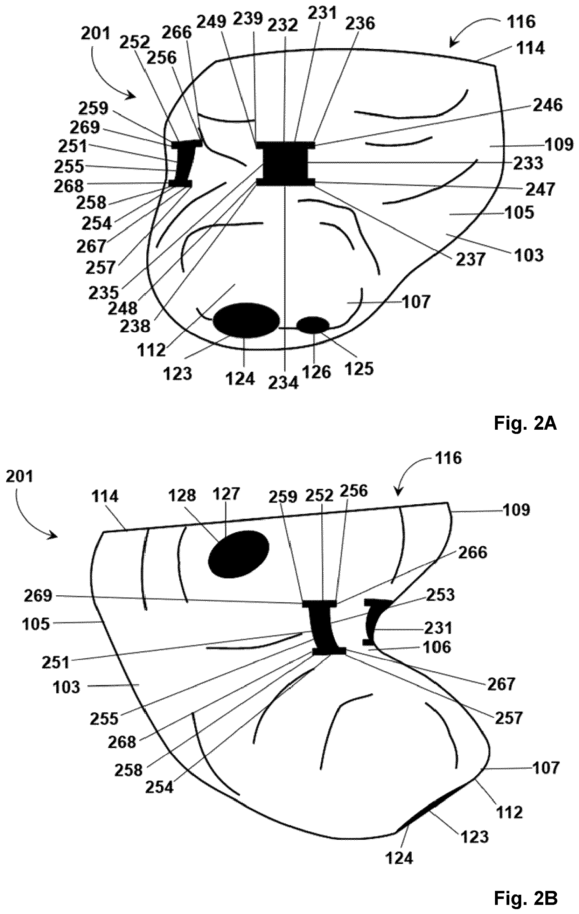

FIGS. 2A and 2B illustrate another exemplary blank 201 of a housing shell for an earpiece configured to be at least partially inserted into an ear canal of a user. Blank 201 substantially corresponds to blank 101 described above in conjunction with FIGS. 1A and 1B, with the exception that windows 231, 251 are provided in wall 103 of blank 201 in place of windows 131, 151 provided in wall 103 of blank 101. Window 231, 251 can be configured such that at least one component to be accommodated in the housing shell can be aligned with window 231, 251, e.g., different components may be aligned with each window 231, 251 or a single component may be aligned with windows 131, 151.

Windows 231 and 251 have an edged shape delimited by at least two edges 232, 233, 234, 235, 252, 253, 254, 255 formed in wall 103, which are joined at an angle at a corner region 236, 237, 238, 239, 256, 257, 258, 259 of window 231, 251. Edges 232 - 235, 252 - 255 extend through wall 103 between an inner surface of wall 103, which is oriented toward an inner volume enclosed by wall 103, and an outer surface of wall 103, which is oriented toward an external environment of wall 103. In an approximation of a curvature of wall 103 as a plane, as described above, a circumference of window 231 is delimited by four edges 232 - 235 and a circumference of window 251 is delimited by four edges 252 - 255 substantially extending rectilinearly along wall 103. Edges 232 - 235 bordering window 231 and edges 252 - 255 bordering window 251 extend pairwise at an angle of about 90° relative to one another. In particular, first edge 232, 252 and second edge 233, 253 are joined at a first corner region 236, 256, second edge 233, 253 and third edge 234, 254 are joined at a second corner region 237, 257, third edge 234, 254 and fourth edge 235, 255 are joined at a third corner region 238, 258, and fourth edge 235, 255 and first edge 232, 252 are joined at a fourth corner region 239, 259.

A recess 246, 247, 248, 249, 266, 267, 268, 269 projecting from at least one of edges 232 - 235, 252 - 255 at at least one corner region 236 - 239, 256 - 259 is formed in wall 103. To illustrate, recess 246 - 249, 266 - 269 projects from at least one edge 232 - 235, 252 - 255 in a direction away from an inner region of window 231, 251 extending between edges 232 - 235, 252 - 255 and/or facing edges 232 - 235, 252 - 255. In the illustrated example, a respective recess 246 - 249 projects from each corner region 236 - 239 of edged window 231. A respective recess 266 - 269 also projects from each corner region 256 - 259 of edged window 251. In particular, a first recess 246, 266 projects from at least one of edges 232, 233, 252, 253 at first corner region 236, 256, a second recess 247, 267 projects from at least one of edges 233, 234, 253, 254 at second corner region 237, 257, a third recess 248, 268 projects from at least one of edges 234, 235, 254, 255 at third corner region 238, 258, and a fourth recess 249, 269 projects from at least one of edges 232, 235, 252, 255 at fourth corner region 239, 259. Recess 246 - 249, 266 - 269 extends at least partially extend through wall 103. In some instances, recess 246 - 249, 266 - 269 extends through wall 103 between the inner surface and the outer surface of wall 103.

Thus, in the illustrated example, window 231 borders edges 232 - 235 formed in wall 103 and recesses 246 - 249 formed in wall 103 at corner regions 236 - 239. A circumference of window 231 is delimited by edges 232 - 235 and recesses 246 - 249. Window 251 borders edges 252 - 255 formed in wall 103 and recesses 266 - 269 formed in wall 103 at corner regions 256 - 259. A circumference of window 251 is delimited by edges 252 - 255 and recesses 266 - 269. Recess 246 - 249, 266 - 269 at corner region 236 - 239, 256 - 259 results in a spacing of edges 232 - 235, 252 - 255 joined at corner region 236 - 239, 256 - 259. A distance between edges 232 - 235, 252 - 255 joined at corner region 236 - 239, 256 - 259 corresponds to a width of recess 246 - 249, 266 - 269 at corner region 236 - 239, 256 - 259. The width of recess 246 - 249, 266 - 269 may be defined as a distance in which recess 246 - 249, 266 - 269 extends in a direction in which edge 232 - 235, 252 - 255 from which recess 246 - 249, 266 - 269 projects extends. Corner region 236 - 239, 256 - 259 provided with recess 246 - 249, 266 - 269 may be denoted as a recessed corner.

Recess 246 - 249, 266 - 269 projecting from at least one edge 232 - 235, 252 - 255 at corner region 236 - 239, 256 - 259 can facilitate a further processing of blank 101 in order to produce a housing shell from blank 101. In particular, recess 246 - 249, 266 - 269 can offer the advantage to allow a removal, or at least a partial removal, of residuals of the resin which may remain on wall 103 of blank 101 after additive manufacturing from the resin by means of mechanical forces applied on blank 101. Mechanically removing at least part of the resin residuals can be desirable, e.g., for a better environmental friendliness and/or material savings and/or cost savings. When subjecting blank 101 to a mechanical force, however, a removal of the resin residuals from a surface of wall 103 may be hindered by surface structures in wall 103 at which the resin residuals tend to accumulate instead of being taken away. Those surface structures can comprise sharp corners 136 - 139, 156 - 159 as illustrated in FIGS. 1A and 1B. Accumulating resin residuals at corners 136 - 139, 156 - 159 may thus lead to a partial shadowing of windows 131 and 151 which may limit the performance of a component to be aligned with windows 131 and 151. In contrast, recessed corners 236 - 239, 256 - 259 as illustrated in FIGS. 2A and 2B can be employed as a pocket for receiving the residual resin without reducing a desired dimension of windows 231 and 251 by the resin residuals which would otherwise accumulate at the corner regions. Recess 246 - 249, 266 - 269 can offer another advantage to allow a stable fixation of a component or a part of a component inside windows 231 and 251 by application of an adhesive inside recess 246 - 249, 266 - 269. In particular, when multiple recesses 246 - 249, 266 - 269 at different corner regions 236 - 239, 256 - 259 are provided, an adhesive bonding of a component or component part inside recesses 246 - 249, 266 - 269 can be effectively distributed around a circumference of windows 231 and 251. Those and other advantages are further described in the description that follows.

When comparing edged window 131, 151 illustrated in FIGS. 1A and 1B with the edged window 231, 251 illustrated in FIGS. 2A and 2B, a general shape of window 131, 151 as defined by edges 132 - 135, 152 - 155 can be preserved in window 231, 251 as defined by edges 232 - 235, 252 - 255, which may be prescribed by the dimensions of the component to be aligned with 131, 151, 231, 251 to provide for a proper functioning. To illustrate, the squared shape of window 131 defined by edges 132 - 135 may be preserved in window 231 along edges 232 - 235. The rectangular shape of window 151 defined by edges 152 - 155 may be preserved in window 251 along edges 252 - 255. However, the shape of window 231, 251 varies at least slightly at corner region 236 - 239, 256 - 259 as compared to window 131, 151 at corner region 136 - 139, 156 - 159 by additional recess 246 - 249, 266 - 269. In particular, the size of window 231, 251 is slightly increased at corner region 236 - 239, 256 - 259 by recess 246 - 249, 266 - 269 as compared to the size of window 131, 151 at corner region 236 - 239, 256 - 259 by additional recess 246 - 249, 266 - 269. Providing recess 246 - 249, 266 - 269 at corner region 236 - 239, 256 - 259 of window 231, 251 may involve a certain compromise, e.g., with regard to an unfavorable optical appearance of window 231, 251 as compared to window 131, 151 due to recess 246 - 249, 266 - 269. However, this compromise may be compensated by various benefits offered by recess 246 - 249, 266 - 269 as described above and below.

In some implementations, at least one window 131, 151 with only sharp corners 136 - 139, 156 - 159 may be provided in blank 201 in addition to at least one window 231, 251 comprising recessed corners 236 - 239, 256 - 259. To illustrate, some components to be aligned with window 131, 151 may be less prone to disturbances by residual resin accumulations in the corner regions as compared to other components, which may then be aligned with window 231, 251. In some other implementations, as illustrated in FIGS. 2A and 2B, edged windows 231, 251 provided in blank 201 are all equipped with recessed corners 236 - 239, 256 - 259, e.g. to ensure a proper functioning of all components to be aligned with windows 231, 251.

In some implementations, window 131, 151, 231, 251 is formed in wall 103 during the additive manufacturing of blank 101, 201 from a resin. To this end, constraints for positioning window 131, 151, 231, 251 on wall 103 may be provided and a position of window 131, 151, 231, 251 on wall 103 may be determined by relating the constraints to the previously determined user-specific ear canal geometry. To illustrate, the creation of the 3D model, as described above, may further include determining a set of constraints for an optimal position of 131, 151, 231, 251 on wall 103 in blank 101, 201. The constraints may include locations that ensure a desired and/or optimized functionality of the component to be aligned with window 131, 151, 231, 251, e.g. to constrain a detection range of a sensor within the ear canal, to position the component at a desired position at the ear canal, to provide for a desired distance between two components or component parts to be aligned with two windows 131, 151, 231, 251, and/or the like. In particular, window 231, 251 including recessed corners 236 - 239, 256 - 259 may be formed during the additive manufacturing of blank 201. In this way, window 231, 251 may be formed in blank 201 in a cost and time effective way and/or with good precision. In some other implementations, window 231, 251 may be formed by first forming window 131, 151 in wall 103 during the additive manufacturing of the blank and then cutting out recesses 246 - 249, 266 - 269 at sharp corners 136 - 139, 156 - 159 to obtain recessed corners 236 - 239, 256 - 259. In some other implementations, window 231, 251 may be cut out from wall 103 after the additive manufacturing of the blank.

In the illustrated example, window 231 is positioned at concave curvature 106 of wall 103 conforming to a bend of the ear canal. Thus, a component aligned with window 231 can be positioned at the ear canal bend, e.g., to interact with the ear canal bend and/or to detect a signal from the ear canal bend. Window 251 is positioned next to window 231, in particular at a corresponding position on a longitudinal axis of blank 101 extending between front end 112 and rear end 114. Window 251 has a distance from window 231 in a circumferential direction of wall 103. For example, an optical sensor comprising a photodetector and a light source may be aligned with windows 231, 251, e.g., such that the photodetector is aligned with window 231 positioned at concave curvature 106 of wall 103 and the light source is aligned with circumferentially spaced window 251. Positioning the photodetector at the ear canal bend can improve the detection sensitivity and/or reliability, e.g., when detecting a property of blood flowing through tissue at the ear canal bend, due to a reduced impact of stray light and/or decreased of impact motion artefacts occurring due to a movement of the housing shell inside the ear canal with a user movement. Positioning the light source close to the ear canal bend can further improve the detection sensitivity of the photodetector, e.g. due to a larger intensity of the light, which is emitted by the light source and scattered at the ear tissue, arriving at the photodetector. In some implementations, the optical sensor may be a photoplethysmography (PPG) sensor.

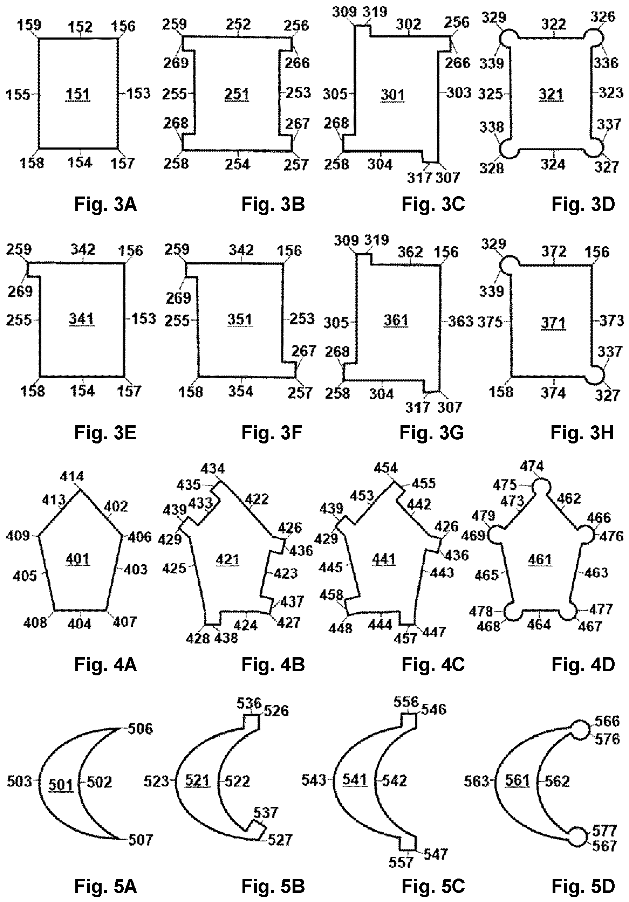

FIGS. 3A- 3H illustrate exemplary windows 151,251, 301, 321, 341, 351, 361, 371 which may be provided in wall 103 of blank 101, 201. FIG. 3A shows window 151 bordering edges 152 - 155 formed in wall 103 of blank 101, as depicted in FIGS. 1A and 1B, for illustrative purposes.

FIG. 3B shows window 251 bordering edges 252 - 255 and recesses 266 - 269 formed in wall 103 of blank 201, as also depicted in FIGS. 2A and 2B. A circumference of window 251 is delimited by edges 252 - 255 and recesses 266 - 269 projecting from at least one of the pair of edges 252 - 255 joined at respective corner region 256 - 259. Recess 266 - 269 is flush with one of edges 252 - 255 and projects from the other of edges 252 - 255 which are joined at the corner region 256 - 259. Two recesses 266, 269 and 267, 268 project from edge 253, 255 at opposing ends of edge 253, 255. Each of the opposing ends of edge 253, 255 adjoins one recess 266, 269 and 267, 268. Two recesses 266, 267 and 269, 268 are flush with edge 252, 254 at opposing ends of edge 252, 254. Each of the opposing ends of edge 252, 254 extends into one recess 266, 267 and 269, 268. Two edges 253, 255 each with two projecting recesses 266, 269 and 267, 268 extend in parallel to one another. Two edges 252, 254 each flush with two recesses 266, 267 and 269, 268 extend in parallel to one another. It has been found that such a geometry of window 251 can be particularly effective to accumulate resin residuals in recesses 266 - 269 in a mechanical cleaning of blank 201, e.g., by centrifuging blank 201, after forming blank 201 from a resin in an additive manufacturing process. Further, recess 266 - 269 flush with one of edges 252 - 255 can be advantageous to allow a precise alignment of a component with the window at a respective corner region 256 - 259, e.g., when a part of the component to be aligned with corner region 256 - 259 has no well-defined borders to be aligned with edges 252 - 255.

Window 251 has an H-shape, wherein the two edges 252, 254 flush with two recesses 266, 267 and 269, 268 each constitute one of the two vertical lines of the letter H, and the two edges 253, 255 with two projecting recesses 266, 269 and 267, 268 together constitute the horizontal line connecting the two vertical lines of the letter H. In particular, first recess 266 is flush with first edge 252 and projects from second edge 253 joined at first corner region 256, second recess 267 also projects from second edge 253 and is flush with third edge 254 joined at second corner region 257, third recess 268 is also flush with third edge 254 and projects from fourth edge 255 joined at third corner region 258, and fourth recess 267 also projects from fourth edge 255 and is flush with first edge 252 joined at fourth corner region 259.

FIG. 3C illustrates an exemplary window 301 bordering edges 302, 303, 304, 305 and recesses 266, 317, 268, 319 at corner regions 256, 307, 258, 309, which may be formed in wall 103 of blank 101, 201, as depicted in FIGS. 1A, 1B, 2A and 2B. A circumference of window 301 is delimited by edges 302 - 305 and recesses 266, 317, 268, 319 projecting from at least one of edges 302 - 305 joined at corner region 256, 307, 258, 309. Recess 266, 317, 268, 319 is flush with one of edges 302 - 305 and projects from the other of edges 252 - 255 which are joined at the corner region 256, 307, 258, 309. Recess 266, 317, 268, 319 projects from single edge 302 - 305. Edge 302 - 305 is flush with one recess 266, 317, 268, 319 at one end of edge 302 - 305, wherein another recess 266, 317, 268, 319 projects from edge 302 - 305 at the other end of edge 302 - 305. Two edges 302, 302 and 304, 305 each flush with one recess 266, 317, 268, 319 extend in parallel to one another. Two edges 302, 304 and 303, 305 each flush with one recess 266, 317, 268, 319 are joined at corner region 256, 307, 258, 309 at an angle, e.g., at a right angle. In particular, first recess 266 is flush with first edge 302 and projects from second edge 303 joined at first corner region 256, second recess 307 is flush with second edge 303 and projects from third edge 304 joined at second corner region 307, third recess 268 is flush with third edge 304 and projects from fourth edge 305 joined at third corner region 258, and fourth recess 319 is flush with fourth edge 305 and projects from first edge 302 joined at fourth corner region 309.

FIG. 3D illustrates an exemplary window 321 bordering edges 322, 323, 324, 325 and recesses 336, 337, 338, 339 at corner regions 326, 327, 328, 329, which may be formed in wall 103 of blank 101, 201, as depicted in FIGS. 1A, 1B, 2A and 2B. A circumference of window 321 is delimited by edges 322 - 325 and recesses 336 - 339 projecting from both edges 322 - 325 joined at corner region 326 - 329. Recess 336 - 339 projecting from both edges 322 - 325 can be advantageous in that a larger space for accumulating resin residuals inside recess 336 - 339 during a mechanical cleaning may be provided, e.g., as compared to a recess projecting from only one of edges 322 - 325. In the illustrated example, recesses 336 - 339 project from both edges 322 - 325 joined at each corner region 326 - 329.

FIG. 3E, FIG. 3F, FIG. 3G, FIG. 3H illustrate exemplary windows 341, 351, 361, and 371 comprising at least one sharp corner 156 - 159 and at least one recessed corner 256 - 259, 307, 309, 326 - 329. Such a configuration can be useful to provide accumulation of resin residuals during mechanical cleaning of blank 101, 201 in individual corner region 256 - 259, 307, 309, 326 - 329 inside recess 266 - 269, 317, 319, 336 - 339, whereas in individual sharp corner 156 - 159 an accumulation of resin residuals extending between edges 252 - 255, 302 - 305, 322 - 325 inside the window is taken into account. E.g., a performance of a component to be aligned with window 341, 351, 361, 371 may be compromised by resin accumulations in a particular sharp corner, which may thus be avoided by providing the recessed corner instead, and unaffected by resin accumulations at another sharp corner, which may then be kept. A circumference of window 341 shown in FIG. 3E is delimited by edges 153, 154, 255, 342 and single recess 269. A circumference of window 351 shown in FIG. 3F is delimited by edges 253, 354, 255, 342 and two recesses 267, 269. A circumference of window 361 shown in FIG. 3G is delimited by edges 362, 263, 304, 305 and three recesses 268, 317, 319. A circumference of window 371 shown in FIG. 3H is delimited by edges 372, 373, 374, 375 and two recesses 337, 339. As illustrated, when window 351, 371 comprises two recesses 267, 269, 337, 339, recesses 267, 337 and 269, 339 may be provided at diametrically opposed corner regions 257, 327 and 259, 329 and/or project from parallel edges 253, 373 and 255, 375, e.g. at opposed ends of edges 253, 373 and 255, 375.

In the examples illustrated in FIGS. 3B, 3C, 3E - 3G, recess 266 - 269, 317, 319 has a rectangular shape, e.g., a square shape. In the example illustrated in FIGS. 3D and 3H, recess 336 - 339 has an rounded shape, e.g., an elliptical or circular shape. Other shapes of recess 266 - 269, 317, 319 are conceivable, for instance a rounded shape, or another polygonal shape, e.g., a triangle, tetragon, pentagon, hexagon, and/or a combination thereof and/or any other suitable shape. Correspondingly, recess 336 - 339 may be polygonal or may have any other suitable shape. In the illustrated examples, different recesses 266 - 269, 317, 319, 336 - 339 at all corner regions 256 - 259, 307, 309, 326 - 329 of respective window 251, 301, 321 have a corresponding size and/or shape. Different sizes and/or shapes of recesses 266 - 269, 317, 319, 336 - 339 in a respective window 251, 301, 321 are also conceivable.

A width of recess 266 - 269, 317, 319, 336 - 339 may be defined as a distance in which recess 266 - 269, 317, 319, 336 - 339 extends in a direction in which edge 252 - 255 302 - 305, 322 - 325, 342, 354, 362, 372 from which recess 246 - 249, 317, 319, 336 - 339 projects extends. In some implementations, the width of recess 266 - 269, 317, 319, 336 - 339 is of at most one fifth of the length of edge 252 - 255, 302 - 305, 322 - 325, 342, 354, 362, 372 from which recess 246 - 249, 317, 319, 336 - 339 projects. In some examples, the width of recess 266 - 269, 317, 319, 336 - 339 is at most one tenth of the length of edge 252 - 255, 302 - 305, 322 - 325, 342, 354, 362, 372 from which recess 246 - 249, 317, 319 projects. It has been found that such a width of recess 266 - 269, 317, 319, 336 - 339 can be sufficient to allow accumulation of resin residuals within the recess and/or to provide for a stable fixation of a component or a component part inside the window, e.g. by an adhesive provided in a cross-sectional area of recess 266 - 269, 317, 319, 336 - 339, which cross-sectional area remains after an accumulation of resin residuals inside recess 266 - 269, 317, 319, 336 - 339 after a mechanical cleaning of blank 101, 201.

As illustrated in FIGS. 3A - 3H, edges 252 - 255, 302 - 305, 322 - 325, 342, 354, 362, 372 partially delimiting the circumference of windows 251, 301, 321, 341, 351, 361, 371 overlap with a shape of a rectangle, e.g., as defined by edges 152 - 155 delimiting window 151. In particular, edges 152 - 155, 252 - 255, 302 - 305, 322 - 325, 342, 354, 362, 372 of windows 151, 251, 301, 321, 341, 351, 361 are rectangularly arranged. Recess 266 - 269, 317, 319, 336 - 339 projects from this rectangular shape.

FIG. 4A, FIG. 4B, FIG. 4C, and FIG. 4D illustrate exemplary windows 401, 421, 441, and 461 defined by edges overlapping with another polygonal shape. A circumference of window 401, as shown in Fig. 4A for illustrative purposes, is delimited by edges 402, 403, 404, 405, 413 joined at corner regions 406, 407, 408, 409, 414 has a shape of a pentagon. A circumference of window 421, as shown in Fig. 4B, is delimited by edges 422, 423, 424, 425, 433 and recesses 435, 436, 437, 438, 439 projecting from one of edges 422 - 425, 433 joined at corner regions 426, 427, 428, 429, 434, wherein edges 422 - 425, 433 are arranged as a pentagon. Two recesses 435, 436 and 437, 439 project from edge 423, 433 at opposing ends of edge 423,433. A circumference of window 441, as shown in Fig. 4C, is delimited by edges 442, 443, 444, 445, 453 and recesses 436, 439, 455, 457, 458 projecting from one of edges 442 - 445, 453 joined at corner regions 426, 429, 447, 448, 459, wherein edges 442 - 445, 453 are arranged as a pentagon. Edge 443, 453 is substantially flush with one recess 455, 457 at one end, wherein another recess 436, 439 projects from edge 443, 453 at another end of edge 443, 453. In the illustrated examples, recess 435 - 439, 455, 457, 458 is rectangularly shaped. A circumference of window 461, as shown in Fig. 4D, is delimited by edges 462, 463, 464, 465, 473 and recesses 475, 476, 477, 478, 479 projecting from both edges 462 - 465, 473 joined at corner regions 466, 467, 468, 469, 474, wherein edges 462 - 465, 473 are arranged as a pentagon. In the illustrated example, recess 475 - 479 has a rounded shape.

FIG. 5A, FIG. 5B, FIG. 5C, and FIG. 5D illustrate exemplary windows 501, 521, 541, and 561 defined by curved edges. The edges have a different curvature. A circumference of window 501, as shown in Fig. 5A for illustrative purposes, is delimited by edges 502, 503 joined at corner regions 506, 507 defining a crescent shape. A circumference of window 521, as shown in Fig. 5B, is delimited by edges 522, 523 and recesses 536, 537 projecting from one of edges 522, 523 joined at corner regions 526, 527, wherein edges 522, 523 are arranged as a crescent. Edge 522, 523 is substantially flush with one recess 536, 537 at one end, wherein another recess 536, 537 projects from edge 522, 523 at another end of edge 522, 523. A circumference of window 541, as shown in Fig. 5C, is delimited by edges 542, 543 and recesses 556, 557 projecting from one of edges 542, 543 joined at corner regions 546, 547, wherein edges 542, 543 are arranged as a crescent. Two recesses 556, 557 project from edge 543 at opposing ends of edge 543. In the illustrated examples, recess 536, 537, 546, 547 is rectangularly shaped. A circumference of window 561, as shown in Fig. 5D, is delimited by edges 562, 563 and recesses 576, 577 projecting from both edges 562, 563 joined at corner regions 566, 567, wherein edges 562, 563 are arranged as a crescent. In the illustrated example, recess 576, 577 has a rounded shape.

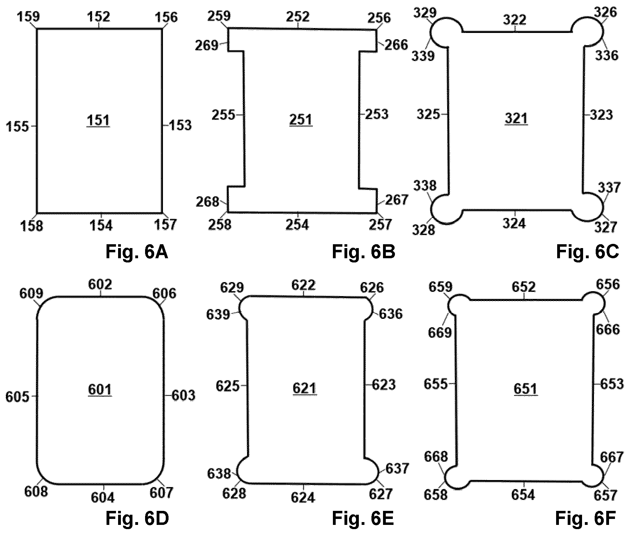

FIG. 6A, FIG. 6B, and FIG. 6C illustrate exemplary windows 151, 251, 321 which may be formed in wall 103 of blank 101, 201 in an additive manufacturing process, or after the additive manufacturing, and FIG. 6D, FIG. 6E, and FIG. 6F illustrate corresponding exemplary windows 601, 621, 651 obtained from windows 151, 251, 321 after applying a mechanical force on wall 103 for the purpose of removing resin residuals from a surface of wall. FIG. 6D shows window 601 resulting from subjecting wall 103 provided with sharp cornered window 151 depicted in FIG. 6A to the mechanical force. Window 601 borders edges 602, 603, 604, 605 and corner regions 606, 607, 608, 609 at which two respective edges 602 - 605 are joined. As compared to sharp corners 156 - 159 of window 151, corner regions 606 - 609 of window 601, which may have a rounded shape as illustrated, or any other shape, extend into an area covered by window 151 before applying the mechanical force. Correspondingly, a length of edges 602 - 605 bordering window 601 is reduced as compared to a length of edges 152 - 155 bordering window 151. Rounded corners 606 - 609 are formed by resin residuals accumulating in sharp corners 156 - 159 caused by application of the mechanical force. Rounded corners 606 - 609 can negatively impact a functionality of a component to be aligned with window 601, e.g. due to a partial shadowing of the component and/or due to an inferior possibility to fix the component and/or a part of the component inside window 601 caused by the accumulated resin at rounded corners 606 - 609.

FIG. 6E shows window 621 resulting from subjecting wall 103 provided with recessed cornered window 251 depicted in FIG. 6B to the mechanical force. Window 621 borders edges 622, 623, 624, 625 and recesses 636, 637, 638, 639 at corner regions 626, 627, 628, 629 at which two respective edges 622 - 625 are joined. Window 621 is delimited by edges 622 - 625 and recesses 636 - 639. As compared to recesses 266 - 269 at corner regions 256 - 259 of window 251, recesses 636 - 639 at corner regions 626 - 629 of window 621 are reduced. Recesses 636 - 639 bordering window 621 extend into an area covered by recesses 266 - 269 bordering window 251 before applying the mechanical force. Correspondingly, a length of edges 622 - 625 bordering window 621 is maintained as compared to a length of edges 252 - 255 bordering window 251. Recesses 636 - 639 are at least partially filled with resin residuals accumulating in recesses 636 - 639 caused by application of the mechanical force. However, a rectangular area enclosed between edges 252 - 255 bordering window 251 is preserved by an rectangular area enclosed between edges 622 - 625 bordering window 621. Thus, a proper functionality of a component to be aligned with window 621, which may rely on the rectangular area between the edges unaffected by resin residuals, can be preserved. E.g., a partial shadowing of the component within said area enclosed between edges 622 - 625 can thus be avoided and/or an improved fixation of the component and/or a part of the component inside window 601 within said area enclosed between edges 622 - 625 can be achieved.

FIG. 6F shows window 651 resulting from subjecting wall 103 provided with recessed cornered window 321 depicted in FIG. 6C to the mechanical force. Window 651 borders edges 652, 653, 654, 655 and recesses 666, 667, 668, 669 at corner regions 656, 657, 658, 659 at which two respective edges 652 - 655 are joined. Window 651 is delimited by edges 652 - 655 and recesses 636 - 639. As compared to recesses 336 - 339 at corner regions 326 - 329 of window 321, recesses 666 - 669 at corner regions 656 - 659 of window 651 are reduced. But a length of edges 322 - 325, 652 - 655 is maintained, and, consequently, also a rectangular area extending between edges 322 - 325, 652 - 655.

Subjecting wall 103 provided with window 151, 251, 321 to the mechanical force, e.g., to remove resin residuals from wall 103, may include centrifuging and/or applying an air stream and/or vibrating wall 103, e.g. by ultrasonic excitations, and/or applying any other suitable mechanical force, which may cause a continuous and/or interrupted and/or repeated acceleration of wall 103. In some implementations, resin residuals may be removed from wall 103 solely by applying the mechanical force. In other implementations, resin residuals may be removed from wall 103 by first applying a cleaning fluid, e.g., isopropanol, on the surface of wall 103 acting as a solvent for the residual resin and then applying the mechanical force. In this way, an amount of the cleaning fluid to be applied for the purpose of cleaning wall 103 may be at least reduced. After applying the mechanical force, wall 103 may be cured. E.g., the curing may be initiated by applying heat, radiation, electron beams, chemical additives, and/or the like. In some instances, a film of the resin residuals may remain on an inner surface and/or outer surface of wall 103 in addition to the resin residuals accumulated in recesses 266 - 269, 336 - 339 of window 251, 321, which may thus be cured. In this way, a housing shell including wall 103 provided with window 601, 621, 651 may be produced from blank 101, 201 including wall 103 provided with window 151, 251, 321. In some implementations, after fabrication of the housing shell, recesses 636 - 639, 666 - 669 may be further employed to provide for an advantageous fixation of a component and/or part of the component inside window 621, 651.

Removing resin residuals from wall 103 provided with window 151, 251, 321 may also be accomplished without relying on subjecting wall 103 to a mechanical force. E.g., resin residuals may be washed away from wall 103 by applying a larger amount of the cleaning fluid in a washing process. A housing shell produced from blank 101, 201 may then include wall 103 with substantially unaltered window 151, 251, 321. In some implementations, recesses 266 - 269, 336 - 339 may then be employed to provide for an advantageous fixation of a component and/or part of the component inside window 621, 651.

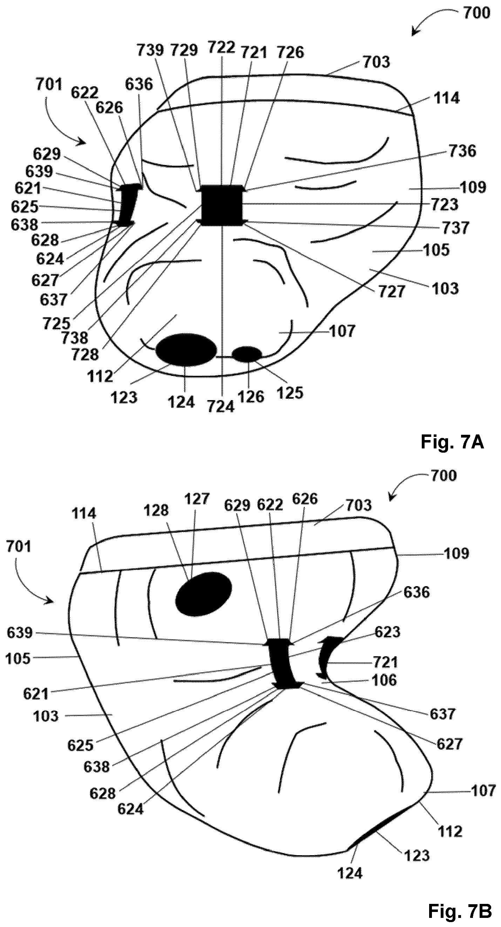

FIGS. 7A and 7B illustrate an exemplary housing 700 for an earpiece configured to be at least partially inserted into an ear canal of a user. Housing 700 comprises a housing shell 701. Housing shell 701 comprises wall 103 in which window 621 is provided, in particular in place of window 251 provided in wall 103 of blank 201 illustrated in FIG. 2A and 2B. Another window 721 is provided in wall 103, in particular in place of window 231 provided in wall 103 of blank 201. Window 721 borders edges 722, 723, 724, 725 and recesses 736, 737, 738, 739 at corner regions 726, 727, 728, 729 at which two respective edges 722 - 725 are joined at an angle. Window 721 is delimited by edges 722 - 725 and recesses 736 - 739. As compared to recesses 246 - 249 at corner regions 236 - 239 of window 231, recesses 736 - 739 at corner regions 726 - 729 of window 721 are reduced. Housing shell 701 may be produced from blank 201 in the above described way, in particular by subjecting blank 201 to a mechanical force. Housing 700 further comprises a faceplate 703. Faceplate 703 is arranged at rear end 114 of wall 103 to cover rear opening 116. Faceplate 703 may be removably attached to wall 103.

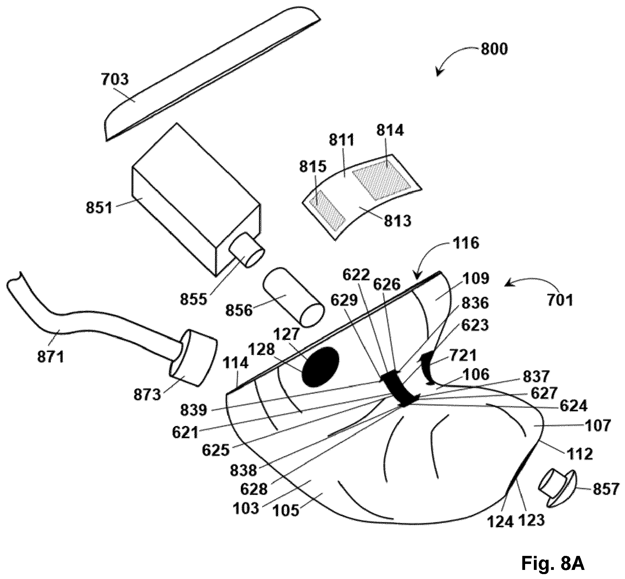

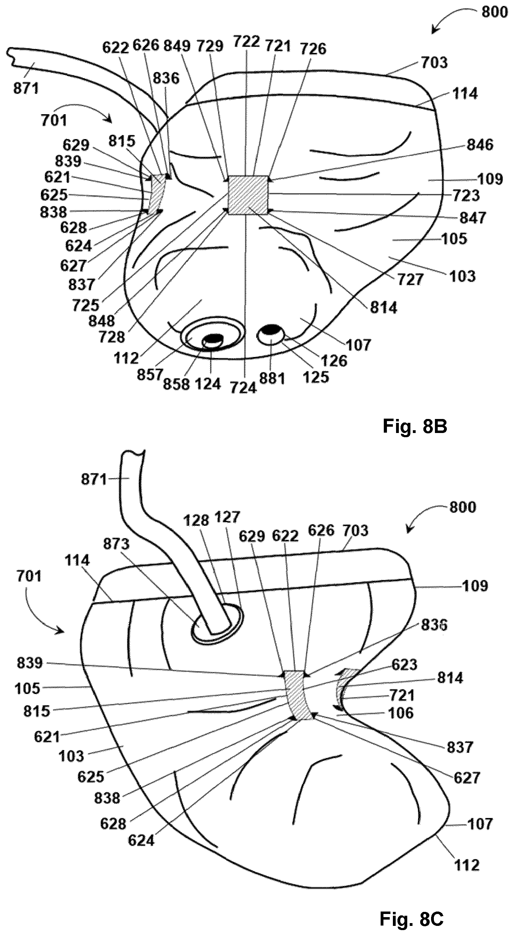

FIGS. 8A, 8B and 8C illustrate an exemplary earpiece 800 for a hearing device configured to be at least partially inserted into an ear canal of a user. FIG. 8A shows earpiece 800 in an exploded view, FIG. 8B shows earpiece 800 in a front view, and FIG. 8C shows earpiece 800 in a lateral view. Earpiece 800 comprises housing shell 701 and faceplate 703 arranged at rear end 114 of wall 103 housing shell 701. Earpiece 800 further comprises a component 811 aligned with windows 621, 721. In the illustrated example, component 811 is an optical sensor comprising a first active area 814 configured to detect light, e.g., a photodetector, and a second active area 815 configured to emit light, e.g., a light source or multiple light sources emitting at different wavelengths, for instance a light emitting diode (LED). First active area 814 is aligned with first window 721. Second active area 815 is aligned with second window 621. First active area 814 and second active area 815 may integrated with a circuit board 813.

In some instances, first active area 814 and/or second active area 815 may correspond to an area spanned by edges 722 - 725, 622 - 625 of window 721, 621. In particular, first active area 814 may comprise edges substantially matching edges 722 - 725 of first window 721 and/or second active area 815 may comprise edges substantially matching edges 622 - 625 of second window 621. E.g., active area 814, 815 may be aligned with edges 722 - 725, 622 - 625 of window 621, 721. In some instances, first active area 814 and/or second active area 815 is smaller than an area spanned by edges 722 - 725, 622 - 625 of first window 721 and/or second window 621. E.g., active area 814, 815 may be aligned in a center of window 621, 721 or with one of edges 722 - 725, 622 - 625 of window 621, 721, or with two of edges 722 - 725, 622 - 625 joined at a corner region 726 - 729, 626 - 629. Recesses 636 - 639, 736 - 739 in wall 103 of shell 701 thus protrude from active area 814, 815 after aligning active area 814, 815 with window 721, 621. Before aligning component 811 with window 721, 621, component 811 can be inserted into shell 701 through rear opening 116.

After aligning component 811 with window 721, 621, component 811 can be fixed in this position. This may comprise filling at least a portion of window 721, 621 with an adhesive, e.g., a glue. In particular, recess 636 - 639, 736 - 739 in wall 103 of housing shell 701 may be filled with the adhesive to provide a fixation of component 811 at window 721, 621, e.g. inside window 721, 621, at fixation points distributed over corner regions 726 - 729, 626 - 629 to provide a stable fixation. Further, a sealing of window 721, 621 with component 811 or a part of component 811 may thus be obtained inside window 721, 621 by the at least partial filling with the adhesive. In this way, recesses 836 - 839, 846 - 849 filled with the adhesive can be obtained in wall 103 of housing shell 701 in place of open recesses 636 - 639, 736 - 739.

Earpiece 800 further comprises a sound delivery assembly including a receiver 851 and a sound tube 851 inserted into housing shell 701, e.g., through rear opening 116, and a sound outlet 857 inserted into rounded window 123 delimited by edge 124 formed in wall 103. Receiver 851 is configured to generate sound and comprises a sound port 855 to output the generated sound. Sound tube 851 comprises a first end connected to sound port 855 of receiver 851, and a second end connected to sound outlet 857. Sound tube 851 is configured to conduct the sound generated by receiver 851 to sound outlet 857. Sound outlet 857 is configured to deliver the sound generated by receiver 851 into the ear canal. Sound outlet 857 comprises an opening 858 through which the sound can be delivered.

In the illustrated example, earpiece 800 further comprises a cable 871 including a cable connector 873 inserted into rounded window 127 delimited by edge 128 formed in wall 103. Cable 871 can be employed to connect components inserted into housing shell 701, e.g., component 811 aligned with window 721, 621 and/or receiver 851, with other components external from housing shell 701. E.g., the other components may be provided in an additional housing different from housing 700, as further described below. E.g., component 811 may be connected to receiver 851, and receiver 851 may be connected to cable 871 via cable connector 873.

In the illustrated example, earpiece 800 further comprises a vent 881 extending through rounded window 125 delimited by edge 126 formed in wall 103. The vent is configured to provide for venting between the inner region of the ear canal and the ambient environment outside the ear canal when earpiece 800 is at least partially inserted into the ear canal. E.g., vent 881 may extend between open window 125 in front wall portion 107 and an open window provided at rear end 114 of housing shell 701, e.g., an opening provided in faceplate 703. E.g., vent 881 may be implemented as a tube extending between window 125 and the window at rear end 114.

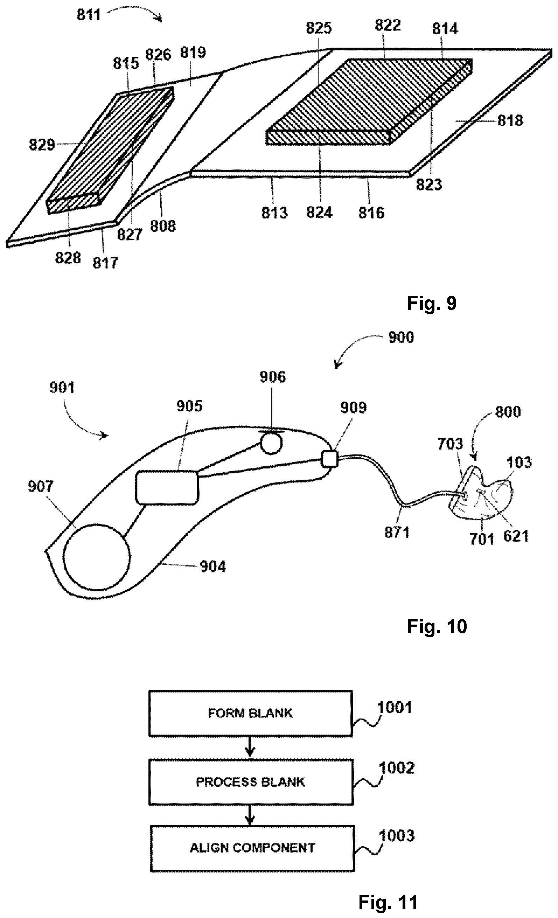

FIG. 9 illustrates an exemplary component 811 comprising first active area 814 and second active area 815 integrated with circuit board 813 in further detail. Circuit board 813 may be implemented as a flexible circuit board, e.g., a flexible printed circuit board (PCB). Circuit board 813 comprises two separate circuit board portions 816, 817. Active area 814, 815 is disposed on a surface 818, 819 of circuit board 813, in particular on a respective surface 818, 819 of a different circuit board portion 816, 817. Circuit board portions 816, 817 are interconnected via a flexible cable 818, e.g. a flat cable strip. Circuit board portions 816, 817 can thus be rotated relative to one another around bendable cable 818 facilitating an alignment of component 811 at a curved inner surface portion of housing shell 701 at which window 721, 621 may be provided.

A circumference of active area 814, 815 is delimited by edges 822, 823, 824, 825, 826, 827, 828, 829. The circumference of active area 814, 815 may match a circumference of an area spanned by edges 722 - 725, 622 - 625 bordering window 721, 621. Edges 822 - 825, 826 - 829 of active area 814, 815 may thus be aligned with edges 722 - 725, 622 - 625 bordering window 721, 621, e.g., such that edges 822 - 825, 826 - 829 of active area 814, 815 adjoin edges 722 - 725, 622 - 625 bordering window 721, 621. In this way, a precise alignment of active area 814, 815 with window 721, 621 can be facilitated. Further, a functionality of component 811 can be optimized by allowing a rather exact positioning of active area 814, 815 at a prescribed location on wall 103 as defined by window 721, 621. In particular, edges 822 - 825 of first active area 814 provided on surface 818 of first circuit board portion 816 may be aligned with edges 722 - 725 of first window 721, and edges 826 - 829 of second active area 815 provided on surface 819 of second circuit board portion 817 may be aligned with edges 622 - 625 of second window 621.

The circumference of active area 814, 815 delimited by edges 822 - 825, 826 - 829 may also be smaller than a circumference of an area spanned by edges 722 - 725, 622 - 625 bordering window 721, 621. Edges 822 - 825, 826 - 829 of active area 814, 815 may thus be aligned with edges 722 - 725, 622 - 625 bordering window 721, 621, e.g., such that edges 822 - 825, 826 - 829 of active area 814, 815 are spaced from edges 722 - 725, 622 - 625 bordering window 721, 621 by a gap between edges 822 - 825, 826 - 829 and edges 722 - 725, 622 - 625. A precise alignment of active area 814, 815 with window 721, 621 may then be achieved, for instance, by providing an equal length of the gap between edges 822 - 825, 826 - 829 and edges 722 - 725, 622 - 625 at opposing edges 822 - 825, 826 - 829 of active area 814.

When aligning component 811 with window 721, 621, component 811 may be positioned such that component 811 or a part of component 811 protrudes in window 721, 621, e.g., from an inner surface of wall 103. For instance, as illustrated in FIG. 9, active area 814, 815 may protrude from surface 818, 819 of circuit board 813. Active area 814, 815 may thus be positioned at window 721, 621 such that active area 814, 815 protrudes into window 721, 621. To illustrate, when aligning component 811 with window 721, 621, surface 818, 819 of circuit board 813 may be positioned at inner surface of wall 103 allowing active area 814, 815 to protrude in window 721, 621. E.g., active area 814, 815 may be substantially flush with an outer surface of wall 103, or active area 814, 815 may extend inside window 721, 621 at a height lower than the outer surface of wall 103. This can further facilitate the alignment of component 811 with window 721, 621 and can also optimize a functionality of component 811, e.g., by bringing a sensor included in component 811 closer to a desired probing zone of the ear canal. Further, a local fixation of component 811 at a desired position at window 721, 621 may thus be achieved. In other examples, when aligning component 811 with window 721, 621, component 811 may be positioned such that component 811 or a part of component 811 is arranged below window 721, 621, e.g., at or below the inner surface of wall 103.

When aligning component 811 with window 721, 621, surface 818, 819 of component 811 may be positioned at an inner surface of wall 103. In some examples, surface 818, 819 may be provided with an adhesive providing at least a preliminary attachment of component 811 at a desired position aligned with window 721, 621. E.g., surface 818, 819 may be provided with a double-sided tape allowing to attach surface 818, 819 to the inner surface of wall 103.

After aligning the component 811 with window 721, 621, e.g., after attaching surface 818, 819 to the inner surface of wall 103, at least a portion of window 721, 621 including recess 636 - 639, 736 - 739 may be filled with an adhesive, as described above, to provide a stable and/or permanent fixation of component 811 aligned with window 721, 621. For instance, when a gap between edges 822 - 825, 826 - 829 and edges 722 - 725, 622 - 625 is provided, the gap may also be filled with the adhesive. Recesses 836 - 839, 846 - 849 filled with the adhesive can thus fixate component 811 or a part thereof, for instance active area 814, 815, inside window 721, 621, and/or surface 818, 819 of component 811, for example surface 818, 819 of circuit board 813, below window 721, 621.

Examples of hearing devices, in which an earpiece according to the invention may be implemented, include hearing instruments, e.g., receiver-in-the-canal (RIC) hearing aids, in-the-ear (ITE) hearing aids, invisible-in-the-canal (IIC) hearing aids, and completely-in-the-canal (CIC) hearing aids, as well as earphones, hearables, and earplugs.

FIG. 10 illustrates an exemplary hearing device 900 implemented as a RIC hearing aid. RIC hearing aid 900 comprises an in-the-ear (ITE) part configured to be at least partially inserted into the ear canal, and a behind-the-ear (BTE) part 901 configured to be worn at a wearing position behind the ear. The ITE part is provided as earpiece 800. BTE part 901 comprises a BTE housing 904 configured to be worn behind the ear. Housing 904 accommodates a processor 905 communicatively coupled to a sound detector 906, e.g., a microphone and/or a microphone array. BTE part 901 and earpiece 800 are interconnected via cable 871. To this end, a cable connector 909 can be provided at BTE housing 904. Processor 905 can be communicatively coupled to receiver 851 and/or component 811 included in earpiece 800 via cable 871. BTE part 152 further includes a battery 907 as a power source for the above described components. ITE part 800 and/or BTE part 901 may include additional components which may serve a particular application.

In some other implementations, a hearing device consisting of an earpiece according to the invention is provided. For instance, an exemplary ITE hearing aid may be provided by earpiece 800 as illustrated in FIGS. 8A - 8C, e.g., without cable 871 for connecting to another housing, wherein processor 905 and sound detector 906 may be included in earpiece 800. An exemplary IIC hearing aid or CIC hearing aid may be correspondingly configured, wherein housing shell 701 may be shaped to reach deeper into the ear canal. An exemplary earphone or hearable may be provided by earpiece 800 illustrated in FIGS. 8A - 8C, wherein cable 871 may be used for a connection to a portable user device, or may be omitted. In some examples, processor 905 and/or sound detector 906 may be included in the earphone and/or hearable. An earplug may be provided by earpiece 800 illustrated in FIGS. 8A - 8C, wherein, e.g., cable 871 and the sound delivery assembly including receiver 851 may be omitted. In some of those applications, vent 881 may also be omitted. Correspondingly, rounded window 123, 125, 127 may be omitted.

FIG. 11 illustrates an exemplary method of producing an earpiece, as exemplified by earpiece 800 illustrated in FIGS. 8A - 8C. At 1001, blank 201 including at least one window 231, 251 bordering edges 232 - 235 in wall 103 joined at recessed corners 236 - 239 is formed by additive manufacturing. At 1002, blank 201 is processed. This may imply subjecting blank 201 to a mechanical force to at least partially remove resin residuals from wall 103. This may further imply curing of blank 201. In this way, housing shell 701 comprising window 721, 621 with reduced recesses 736 - 739, 636 - 639 may be obtained from blank 201. At 1003, component 811 is aligned with window 721, 621. Fixing component 811 in this position may imply filling a part of window 721, 621 including recess 736 - 739, 636 - 639 with an adhesive. In this way, earpiece 800 with filled recesses 846 - 849, 836 - 839 may be obtained from blank 201.

While the principles of the disclosure have been described above in connection with specific devices, systems, and methods, it is to be clearly understood that this description is made only by way of example and not as limitation on the scope of the invention. The above described preferred embodiments are intended to illustrate the principles of the invention, but not to limit the scope of the invention. Various other embodiments and modifications to those preferred embodiments may be made by those skilled in the art without departing from the scope of the present invention that is solely defined by the claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A blank of a housing shell (701) for an earpiece (800) configured to be at least partially inserted into an ear canal of a user, the blank (101, 201) comprising a wall (103) formed from a resin, wherein the wall (103) has a shape at least partially customized to the ear canal and a window (131, 151, 231, 251, 301, 321, 341, 351, 361, 371, 401, 421, 441, 461, 501, 521, 541, 561, 601, 621, 651, 721) extends through the wall (103), the window bordering two edges (232 - 235, 252 - 255, 622 - 625, 722 - 725) formed in the wall (103) and joined at a corner region (236 - 239, 256 - 259, 626 - 629, 726 - 729) of the window, **characterized in that** a recess (246 - 249, 266 - 269, 636 - 639, 736 - 739) projecting from at least one of said edges at the corner region is formed in the wall (103).

2. A housing shell for an earpiece (800) configured to be at least partially inserted into an ear canal of a user, the housing shell (701) comprising a wall (103) formed from a resin, wherein the wall (103) has a shape at least partially customized to the ear canal and a window (131, 151, 231, 251, 301, 321, 341, 351, 361, 371, 401, 421, 441, 461, 501, 521, 541, 561, 601, 621, 651, 721) extends through the wall (103), the window bordering two edges (232 - 235, 252 - 255, 622 - 625, 722 - 725) formed in the wall (103) and joined at a corner region (236 - 239, 256 - 259, 626 - 629, 726 - 729) of the window, **characterized in that** a recess (246 - 249, 266 - 269, 636 - 639, 736 - 739) projecting from at least one of said edges at the corner region is formed in the wall (103).

3. The housing shell of claim 2, wherein the recess (246 - 249, 266 - 269, 636 - 639, 736 - 739) projects from both of said edges (232 - 235, 252 - 255, 622 - 625, 722 - 725) at the corner region (236 - 239, 256 - 259, 626 - 629, 726 - 729).

4. The blank of claim 2, wherein the recess (246 - 249, 266 - 269, 636 - 639, 736 - 739) is flush with one of said edges (232 - 235, 252 - 255, 622 - 625, 722 - 725) at the corner region (236 - 239, 256 - 259, 626 - 629, 726 - 729).

5. The housing shell of any of the claims 2 to 4, wherein said two edges (232 - 235, 252 - 255, 622 - 625, 722 - 725) are a first edge and a second edge, said corner region (236 - 239, 256 - 259, 626 - 629, 726 - 729) is a first corner region and said recess (246 - 249, 266 - 269, 636 - 639, 736 - 739) is a first recess, the window (131, 151, 231, 251, 301, 321, 341, 351, 361, 371, 401, 421, 441, 461, 501, 521, 541, 561, 601, 621, 651, 721) bordering a third edge formed in the wall (103) and joined with the second edge at a second corner region of the window, wherein a second recess projecting from at least one of the second edge and the third edge at the second corner region is formed in the wall (103).

6. The housing shell of claim 5, wherein the first recess is flush with the first edge at the first corner region, and the second recess is flush with the third edge at the second corner region.

7. The housing shell of any of the claims 2 to 6, wherein said window (131, 151, 231, 251, 301, 321, 341, 351, 361, 371, 401, 421, 441, 461, 501, 521, 541, 561, 601, 621, 651, 721) is positioned at a sealing zone of said wall (103), the sealing zone defined as a portion of the wall (103) that is in contact with the ear canal when the housing shell (701) is at least partially inserted into the ear canal.

8. The housing shell of any of the claims 2 to 7, wherein the recess (246 - 249, 266 - 269, 636 - 639, 736 - 739) has a width extending in a direction of one of said edges (232 - 235, 252 - 255, 622 - 625, 722 - 725), wherein the width is of at most one fifth of the length of the edge in which direction the width extends.

9. An earpiece configured to be at least partially inserted into an ear canal of a user, the earpiece (800) comprising the housing shell (701) according to any of claims 2 to 8 and a component (811) inserted into the housing shell (701) such that the component (811) is aligned with said window (131, 151, 231, 251, 301, 321, 341, 351, 361, 371, 401, 421, 441, 461, 501, 521, 541, 561, 601, 621, 651, 721).

10. The earpiece of claim 9, wherein the component (811) is a sensor comprising an active area (814, 815), the active area defined as an area of the sensor configured to receive and/or emit radiation and/or matter, wherein the active area (814, 815) is aligned with said window (131, 151, 231, 251, 301, 321, 341, 351, 361, 371, 401, 421, 441, 461, 501, 521, 541, 561, 601, 621, 651, 721).

11. A method of producing a blank (101, 201) of a housing shell (701) for an earpiece (800) configured to be at least partially inserted into an ear canal of a user, the method comprising:
forming the blank (101, 201) from a resin such that a wall (103) of the blank (101, 201) has a shape at least partially customized to the ear canal and a window (131, 151, 231, 251, 301, 321, 341, 351, 361, 371, 401, 421, 441, 461, 501, 521, 541, 561, 601, 621, 651, 721) extends through the wall (103), the window bordering two edges (232 - 235, 252 - 255, 622 - 625, 722 - 725) formed in the wall (103) and joined at a corner region (236 - 239, 256 - 259, 626 - 629, 726 - 729) of the window, **characterized in that** a recess (246 - 249, 266 - 269, 636 - 639, 736 - 739) projecting from at least one of said edges at the corner region is formed in the wall (103).

12. The method of claim 11, wherein said blank (101, 201) is formed from said resin by a 3D-printing.

13. A method of producing a housing shell (701) for an earpiece (800) configured to be at least partially inserted into an ear canal of a user, the method comprising:
producing a blank (101, 201) of a housing shell (701) according to claim 11 or 12; and
subjecting the blank (101, 201) to a mechanical force to remove residuals of the resin from the wall (103).

14. The method of claim 13, wherein the mechanical force is provided by:
- centrifuging the blank (101, 201); and/or
- applying an air stream on the blank (101, 201); and/or
- causing the blank (101, 201) to vibrate.

15. A method of producing an earpiece (800) configured to be at least partially inserted into an ear canal of a user, the method comprising:
producing a housing shell (701) for the earpiece (800) according to any of claims 13 to 14; and
inserting a component (811) of the earpiece (800) into the housing shell (701) such that the component (811) is aligned with said window (131, 151, 231, 251, 301, 321, 341, 351, 361, 371, 401, 421, 441, 461, 501, 521, 541, 561, 601, 621, 651, 721).
